# EUROPÄISCHE PATENTANMELDUNG

(11) **EP 1 202 313 A1**
(43) Veröffentlichungstag der Anmeldung: **02.05.2002**
(21) Anmeldenummer: 00122967.3
(22) Anmeldetag: 23.10.2000
(51) Int. Cl.: H01H 47/00

(54) **Einrichtung in der Sicherheitstechnik zur Kontrolle der Schaltstellung mechanischer Schaltkontakte**

(71) Anmelder: Safecom Ag, 6022 Grosswangen (CH)
(72) Erfinder: Ineichen, Alois, 6017 Ruswil (CH)

(57) **Zusammenfassung**

Beim sicherheitstechnischen Einsatz elektro-mechanischer Schaltgeräte werden zwanggeführte Kontaktsätze bestehend aus Schliesser und Öffner je durch einen Umschalter (K) ersetzt, dessen Funktionstüchtigkeit mittels eines hochfrequenten Kontrollsignales (HF) periodisch und potentialfrei kontrolliert wird.

Hierzu wird von einem HF-Generator (10) ein HF-Signal (HF) über Koppeltransformatoren (24 ) und (25) sowie Koppelkapazitäten (11) und (12) auf die Kontakte eines Umschalters (K) ein- bzw. ausgekoppelt und über einen HF-Detektor (13) mit Verstärker (22) und A/D-Wandler (23) auf einen anlagesteuernden M-Prozessor (5) übertragen. Entsprechend den Schaltstellungen (ab) und (ac) des Umschalters (K) erfolgt diese Übertragung mit minimaler Amplitude (HFmin) bzw. maximaler Amplitude (HFmax). Der M-Prozessor (5) bewertet die ihm über die Verbindungsleitung (14) zugeführten HF-Signale (HF) nach der Grösse ihrer Amplituden, wobei HFmin der Schaltstellung (ab), HFmax der Schaltstellubg (ac) und HFO einem Defekt im Kontrollkreis (7) entsprechen.

Zur periodischen Kontrolle des Umschalters (K) wird dieser durch den M-Prozessor (5) über die Steuerleitung (4) entregt, worauf er in die Ruhestellung (ac) abfallen soll fälschlicherweise aber auch in der Arbeitsstellung (ab) hängen bleiben kann, z.B. wegen verschweissen der Kontakte. Je nach den vom M-Prozessor (5) nachfolgend empfangenen HF-Signalen (HFmax,HFmin) und (HF0) bewertet er die Funktionstüchtigkeit des Umschalters (K) bzw. des Kontrollkreises (7) und signalisiert dies an den Ausgängen (15) bzw. (16).

Bei Anwendung für höhere Sicherheit, z.B. in fehlersicheren Schaltungen, kann die Einrichtung auch zweikanalig ausgebildet sein, mit zwei Umschaltern (K1,K2), und zwei sicherheitsgerecht zusammengeschalteten und programmierten M-Prozessoren (56,57).

Die antragsgemässe Erfindung ermöglicht, durch optimale Nutzung eines anlagesteuernden M-Prozessors (5) bei der sicherheitstechnischen Anwendung von Relais und Schützen auf die Verwendung zwanggeführter Kontakte zu verzichten.

## Beschreibung

Die vorliegende Erfindung betrifft eine Einrichtung -insbesondere für die Anwendung in der Sicherheitstechnik- zur Kontrolle der Schaltstellung mechanischer Schaltkontakte, enthaltend für jeden zu kontrollierenden Arbeitskontakt
einen diesem fest zugeordneten und von diesem potentialmässig getrennten, als Ruhekontakt wirkenden mechanischen Kontrollkontakt, sowie eine Kontrollschaltung zur Überwachung des Kontrollkontaktes mit einem auf diesen einwirkenden Generator zur Erzeugung eines Kontrollsignales und mit einem von diesem gespeisten Detektor zum Empfang des Kontrollsignales und mit einer Auswerteschaltung zur Abgabe eines Sicherheitssignales.

Einrichtungen der angegebenen Art dienen dem Erkennen und Sichern von fehlerhaften Kontaktstellungen bei elektro-mechanischen Schaltgeräten wie z.B. Relais oder Schütze. Sie genügen den Sicherheitsanforderungen nach EN 954-1, VDE 0801&A1 und IEC 61508 und sind deshalb allgemein bei Sicherheitseinrichtungen anwendbar wie z.B. für den Personenschutz bei gefährlichen Maschinen.

Der bisherige Stand der Technik beim sicherheitstechnischen Einsatz elektro-mechanischer Schaltgeräte wie z.B. Relais oder Schütze ist gekennzeichnet durch die periodische Kontrolle der zugehörigen Kontakte mittels je eines entsprechenden, zwanggeführten, mechanischen Gegenkontaktes, der Teil eines Kontrollkreises ist.

Wie allgemein bekannt, muss bei der sicherheitsgerechten Verschaltung mechanischer Kontakte die sichernde Funktion durch Unterbrechung des Arbeitskreises erfolgen, d.h. durch öffnen des entsprechenden Arbeitskontaktes. Arbeitskontakte bei Relais oder Schützen können aber kleben oder gar verschweissen, wodurch die sichernde Funktion nicht mehr ausgelöst werden kann.
Bei der scherheitstechnischen Anwendung mechanischer Kontakte ist es deshalb Standard, mit einem als Kontrollkontakt wirkenden Ruhekontakt das sichere Öffnen des entsprechenden Arbeitskontaktes periodisch zu kontrollieren. Hierzu sind der Arbeitskontakt und der ihn kontrollierende Ruhekontakt mit einer Brücke mechanisch miteinander verbunden, wobei diese Brücke aus einem elektrisch isolierenden Material besteht. Eine solche Zwangführung genannte Verbindung zweier Kontakte verunmöglicht, dass sich diese relativ zueinander bewegen und gewährleistet so eine feste und auf Dauer gleichbleibende gegenseitige Zuordnung ihrer Schaltstellungen.
Wenn nun in einer solchen Anordnung der Arbeitskontakt (ein Schliesser) nicht öffnet, weil er z. B. verklebt ist, kann der Gegenkontakt (ein Öffner) gezwungenermassen d.h. mit hoher Sicherheit nicht schliessen. Dies wird in einem elektrisch vom Arbeitskontakt isolierten Kontrollkreis erkannt und durch ein Fehlersignal angezeigt, dass der Arbeitskontakt nicht geöffnet hat und die sichernde Funktion deshalb nicht mehr gewährleistet ist.
Dieses sicherheitstechnische Konzept beruht auf periodischer Kontrolle und ist dadurch charakterisiert, dass ein sicherheitsrelevanter Arbeitskontakt immer als Schliesser und der ihn kontrollierende Ruhekontakt immer als Öffner ausgebildet sind. Die damit erreichte Sicherheit entspricht der einer überwachten Nichtredundanz.
Im Gegensatz zum Nichtöffnen ist das Nichtschliessen eines Arbeitskontaktes sicherheitstechnisch nicht relevant, weil es lediglich den Betrieb der nachgeschalteten Betriebsmittel verhindert. Zudem würde dies auch sofort bemerkt. Es ist dehalb sicherheitstechnisch nicht notwendig das Schliessen eines Arbeitskontaktes zu kontrollieren.

Die Erfindung, wie sie in den Ansprüchen gekennzeichnet ist, stellt sich die Aufgabe, die beim sicherheitstechnischen Einsatz elektro-mechanischer Schaltgeräte notwendige periodische Kontrolle der Kontaktstellungen mit elektronischen Mitteln zu gewährleisten und dabei auf die Verwendung zwanggeführter Gegenkontakte zu verzichten.
Diese Aufgabe wird mit der in den kennzeichnenden Merkmalen des unabhängigen Anspruches beschriebenen Erfindung gelöst. Vorteilhafte Weiterbildungen sind in den abhängigen Ansprüchen angegeben. Darüber hinaus weist eine derart gestaltete Einrichtung bei mechanischen Schaltkontakten noch zusätzliche Vorteile auf.

Ein erster Vorteil ergibt sich aus dem Umstande, dass bei Sicherheitsschaltungen auf die Verwendung zwanggeführter Kontakte verzichtet werden kann. Hinzu kommt, dass die sicherheitstechnischen Alternativen elektronischer Art nach einem massiven Preiszerfall sehr kostengünstig geworden sind und wegen ihrer hohen Integrationsdichte für eine Vielzahl parallel laufender Funktionen eingesetzt werden können, z.B. zur Steuerung einer Anlage und zu deren Sicherung.

Die Erfindung ist im folgenden anhand der Beschreibung sowie der Zeichnung in ihrer Anwendung bei der Sicherung elektro-mechanischer Betriebsmittel näher erläutert, doch ist die hier gezeigte Einrichtung allgemein in der Sicherheitstechnik anwendbar. In der lediglich dieses Anwendungsbeispiel der Erfindung darstellenden Zeichnung zeigen:
- Fig.1: schematisch, ein Blockschaltbild der erfindungsgemässen Einrichtung als Ersatz von zwanggeführten Kontakten bei elektro-mechanischen Schaltgeräten.
- Fig. 2: schematisch, eine detaillierte Darstellung der erfindungsgemässen Einrichtung nach Fig. 1 b zur Gewährleistung eines Sicherheitsniveaus entsprechend EN 954-1, Kat. 2.
- Fig. 3: schematisch, eine detaillierte Darstellung einer vorteilhaften Weiterbildung der Erfindung nach Fig. 2, zur Gewährleistung eines Sicherheitsniveaus entsprechend EN 954-1, Kat. 4.

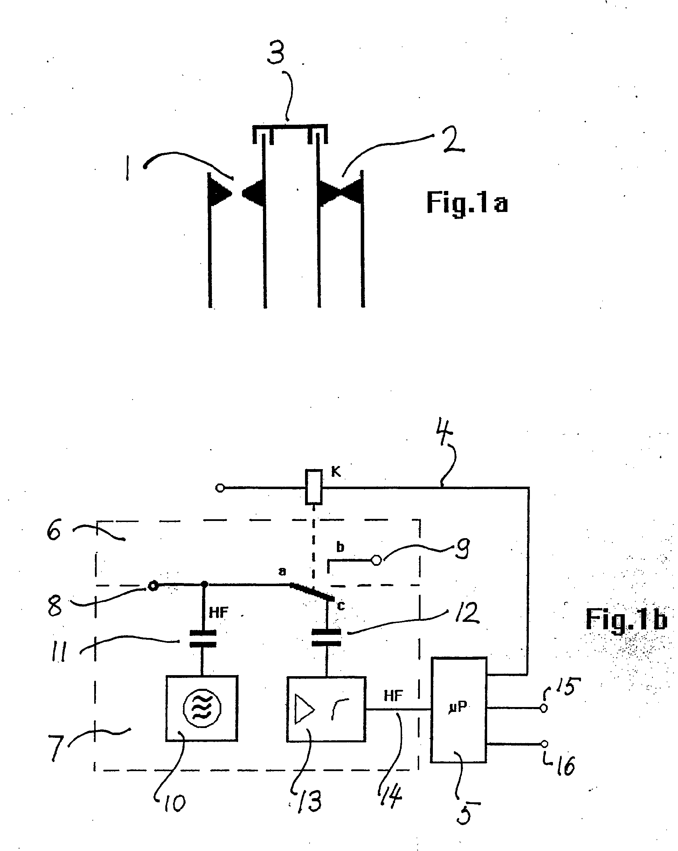

Fig.1 zeigt schematisch, als Blockschaltbild, die erfindungsgemässe Einrichtung als Ersatz zwanggeführter Kontakte z. B. bei einem Relais.
Gemäss Fig.1a besteht die bekannte Anordnung zwanggeführter Kontakte aus einem als Schliesser ausgebildeten Arbeitskontakt (1), einem als Öffner ausgebildeten Ruhekontakt/Kontrollkontakt (2), und einem Käfig (3), der die beiden Kontakte (1,2) mechanisch starr aber elektrisch isolierend miteinander verbindet. Dadurch sind die beiden Kontakte (1,2) in ihren Schaltstellungen einander eindeutig zugeordnet und potentialmässig voneinander getrennt. Diese Anordnung ermöglicht, aus dem Schliessen des Kontrollkontaktes (2) zu folgern, dass der zugehörige, sicherheitsrelevante Arbeitskontakt (1) tatsächlich geöffnet hat, d.h. nicht verklebt oder verschweisst ist.
Die eindeutige Zuordnung der Schaltstellungen zweier Kontakte sowie deren potentialmässige Trennung können aber auch mit der erfindungsgemässen Anordnung nach Fig.1b erreicht werden. Dabei ist an Stelle der in Fig. 1a gezeigten zwanggeführten Kombination Arbeitskontakt/Ruhekontakt (1, 2) ein Umschalter (K) mit Arbeitskontakt (ab) und gegenüberliegendem Kontrollkontakt (ac) vorgesehen, der über die Steuerleitung (4) mit dem die Anlage steuernden M-Prozessor (5) in Verbindung steht, und der in seiner Schaltstellung (ab) Teil eines Arbeitskreises (6) und in seiner Schaltstellung (ac) Teil eines Kontrollkreises (7) ist. Über die Schaltstellung (ab) des Umschalters (K) ist ein Arbeitsstrom zwischen den Klemmen (8) und (9) geschaltet z.B. zum Betrieb eines hier nicht weiter dargestellten Betriebsmittels. In seiner Schaltstellung (ac) dagegen ist im Kontrollkreis (7) ein HF-Signal (HF) von einem HF-Generator (10) über Koppelkapazitäten (11,12) zu einem HF-Detektor (13) geschaltet, der das empfangene HF-Signal über die Verbindungsleitung (14) an den M-Prozessor (5) weiterleitet. Dieser besitzt zwei Sicherheitsausgänge (15) und (16) zur Darstellung der Kontrollergebnisse für den Umschalters (K) bzw. für den Kontrollkreis (7).

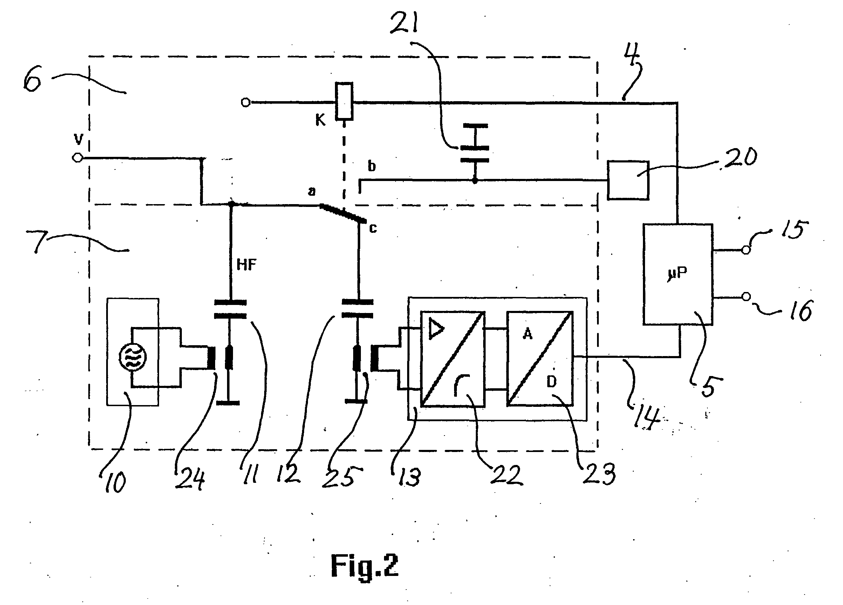

Fig. 2 zeigt im Detail eine mögliche Ausführungsform der erfindungsgemässen Einrichtung nach Fig. 1b als integrierender Bestandteil einer voll elektronischen Anlagesteuerung unter Verwendung eines M- Prozessors (5).
Im Arbeitskreis (6) ist über die Schaltstellung (ab) des Umschalters (K) eine Betriebsspannung (V) auf ein Betriebsmittel (20) geschaltet. Zusätzlich ist im Arbeitskreis (6) zwischen der Arbeitsleitung und der virtuellen Erde eine Entstörkapazität (21) eingeschaltet, zur Ableitung von z.B. über parasitäre Kapazitäten aus dem Kontrollkreis (7) in den Arbeitskreis (6) eingestreuten Störungen des HF-Signales (HF).
Der Kontrollkreis (7) enthält einen HF-Generator (10) und einen HF-Detektor (13), die beide über Koppeltransformatoren (24,25), Koppelkapazitäten (11,12) und die Schaltstellung (ac) des Umschalters (K) miteinander verbunden sind. Der HF-Detektor (13) besteht aus einem Verstärker/Logarithmierer (22) und einem A/D-Wandler (23), zur Aufbereitung des empfangenen HF-Signales (HF) und seine Weiterleitung an den M-Prozessor (5) über die Verbindungsleitung (14). Wieder besitzt der M-Prozessor (5) zwei Ausgänge (15) und (16) zur Darstellung der Kontrollergebnisse für den Umschalter (K) bzw. für den Kontrollkreis (7). Die Koppeltransformatoren (24,25) und die Koppelkapazitäten (11,12) sind für eine Isolationsspannung von 4 kV ausgelegt.
Weiter steht der anlagesteuernde M-Prozessor (5) über die Steuerleitung (4) mit dem Umschalter (K) in Verbindung.

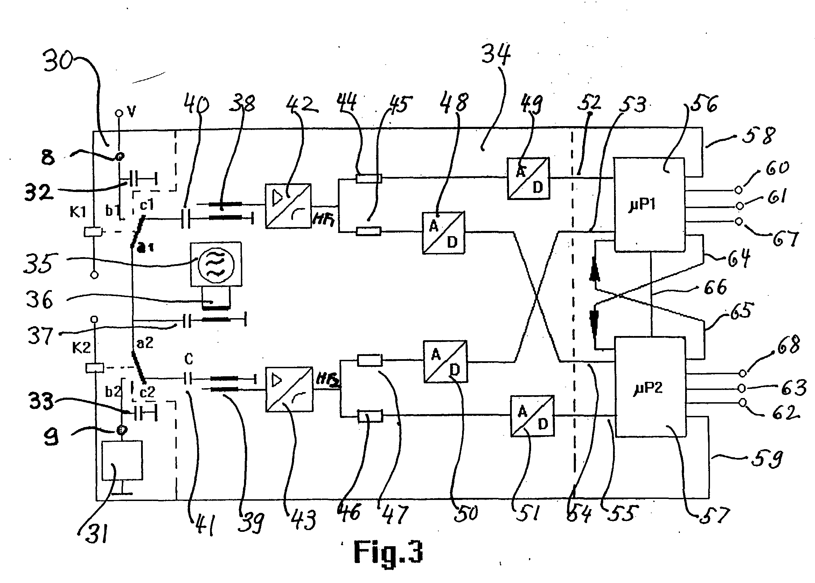

Fig. 3 stellt eine Weiterbildung der antragsgemässen Erfindung nach Fig. 2 dar, wobei mit Ausnahme des HF-Generators (35) und des Betriebsmittels (31) alle Schaltungselemente in doppelter Ausführung vorgesehen sind.
Mit K1 und K2 sind zwei Umschalter bezeichnet, deren Kontakte in Serie geschaltet sind und die in den Schaltstellungen (a1b1) bzw. (a2b2), als Teil des Arbeitskreises (30), ein Betriebsmittel (31) über die Klemmen 8 und 9 mit der Stromversorgung verbinden. Weiter sind mit den Entstörkapazitäten (32) und (33) die über parasitäre Kapazitäten auf die Arbeitsleitung eingestreuten HF-Anteile auf Erde abgeleitet. Der mit (30) bezeichnete Arbeitskreis besteht demnach aus den beiden Umschaltern (K1,K2), ihren Kontakten in den Schaltstellungen (a1b1) und (a2,b2), dem Betriebsmittel (31) sowie den Entstörkapazitäten (32, 33).
Weiter enthält die Fig. 3 einen Kontrollkreis (34), der ausschliesslich der Kontrolle der beiden Umschalter (K1,K2) dient. Hierzu ist von einem HF-Generator (35) über den Koppeltransformator (36) und die Koppelkapazität (37) ein hochfrequentes Kontrollsignal (HF) auf die Kontaktstellungen (a1c1) und (a2c2) eingekoppelt und von diesen über die Koppelkapazitäten (40) bzw. (41) und die Koppeltransformatoren (38) bzw. (39) auf die beiden Verstärker/Logarithmierer (42) bzw. (43) ausgekoppelt. Die Ein- und Auskopplung des hochfrequenten Kontrollsignales (HF) erfolgt dabei potentialfrei. Die HF-Signale (HF1) und (HF2) an den Ausgängen der beiden Verstärker (42) bzw. (43) sind den Kontaktstellungen (a1c1) bzw. (a2c2) der Umschalter (K1) bzw. (K2) zugeordnet und je über zwei Widerstände (44,45) bzw (46, 47) und zwei A/D-Wandler (48,49) bzw. (50,51) auf die Eingänge (52,53) und (54,55) der beiden M-Prozessoren (56) bzw. (57) geschaltet. Über die A/D-Wandler (48,49,50,51) entstehen also vier digitale Signale welche den beiden M-Prozessoren (56,57) zugeführt werden.
Diese sind an ihren Ausgängen über die Steuerleitungen (58) bzw. (59) auf die beiden zu überwachenden Umschalter (K1,K2) zurückgeführt und besitzen ausserdem je zwei Sicherheitsausgänge (60,61) bzw. (62,63), wobei die Kontrollergebnisse für die Umschalter (K1) und (K2) von jedem M-Prozessor (56,57) einzeln ermittelt und an den Ausgängen (60) bzw. (61) und (62) bzw. (63) zur Verfügung gestellt sind. An den Ausgängen (67) und (68) erscheint das Kontrollergebnis für den Kontrollkreis (34).
Die beiden M-Prozessoren (56,57) überwachen sich gegenseitig über die Verbindungsleitungen (64,65), und sie sind zum Informationsaustausch noch während den Teilberechnungen über den Datenlink (66) miteinander verbunden.
Arbeitskreis (30) und Kontrollkreis (34) sind zweikanalig aufgebaut, und die Schaltung nach Fig. 3 entspricht deshalb sicherheitstechnisch einer einfachen Redundanz mit Überwachung.

Die Funktionsweise der erfindungsgemässen Neuerung sei im folgenden anhand ihrer wesentlichen Funktion - nämlich der periodischen Kontrolle von Umschaltern (K,K1,K2) - erläutert und dabei auf die Figuren 1, 2 und 3 verwiesen. Ausgangspunkt ist die Überlegung, dass die Sicherheit elektro-mechanischer Schaltgeräte durch periodische Kontrolle ihrer Funktionstüchtigkeit in ausreichendem Masse gewährleistet werden kann.

In dem vollelektronischen, Schaltungsbeispiel nach Fig. 2 übernimmt der
M-Prozessor (5) neben der Anlagesteuerung auch die periodische Kontrolle aller sicherheitsrelevanten mechanischen Umschalter, im vorliegenden Falle - zur Vereinfachung - durch den Umschalter (K) dargestellt.
Hierzu entregt der M-Prozessor (5) über die Steuerleitung (4) den Umschalter (K), der demzufolge bei normaler Funktion aus der Arbeitsstellung (ab) in die Ruhestellung (ac) abfallen muss. Dadurch wird das vom HF-Generator (10) erzeugte hochfrequente Kontrollsignal (HF) über die Koppeltransformatoren (24,25), die Koppelkapazitäten (9,10) und die Schaltstellung (ac) voll zum HF-Detektor (13) durchgeschaltet, der es nach Verstärkung und Digitalisierung an den M-Prozessor (5) weiterleitet. Aus dem Aufbau des Umschalters (K) ist ersichtlich, dass er gleichzeitig nur in einer der beiden Schaltstellungen (ab) oder (ac) sein kann; nicht aber in beiden. Ist nun das HF-Signal (HF) vom HF-Generator (10) zum HF-Detektor (13) durchgeschaltet muss der Ruhekontakt (ac) geschlossen sein, woraus sich zwingend ergibt, dass die Kontaktstellung (ab) geöffnet ist. Dabei gilt die Amplitude des vom HF-Detektor (13) zum M-Prozessor (5) geleiteten HF-Signales (HF) als Kriterium zur Beurteilung der Funktionstüchtigkeit des Umschalters (K).
Wird das HF-Signal (HF) mit voller Amplitude (HFmax) zum Prozessor (5) übertragen, bewertet dieser die Funktionstüchtigkeit von (K) positiv und geht davon aus, dass dies für die kurze Zeitspanne bis zur nächsten Kontrolle so bleiben wird.

Im Gegensatz dazu ist es aber möglich, dass der Umschalter (K) nach Entregung über die Steuerleitung (4) nicht in seine Ruhestellung abfallen kann, z.B. weil sein Kontakt in der Arbeitslage (ab) verklebt oder gar verschweisst ist. Dies würde eine falsche Funktion der nachgeschalteten Betriebsmittel verursachen, was sich in sicherheitsrelevanten Anwendungen sehr gefährlich auswirken könnte. In diesem Falle kann das HF-Signal nicht mehr vom HF-Generator (10) auf den HF-Detektor (13) durchgeschaltet werden. Wegen parasitärer Kopplungen empfängt der M-Prozessor (5) aber doch ein um mindestens 48 db gedämpftes, minimales HF-Signal (HFmin) und bewertet deshalb diese Kontrolle negativ. Er leitet in der Folge die notwendigen Schritte ein, um die Anlage in den sicheren Zustand zu führen - z.B. durch abschalten.

Da der M-Prozessor (5) "weiss", wann der Umschalter (K) erregt oder entregt ist, kann er die aus den empfangenen HF-Signalen (HFmax,HFmin) abgeleiteten Kontaktstellungen (ab) oder (ac) als richtig oder als falsch beurteilen.

Die Funktion des vollelektronischen Schaltungsbeispieles nach Fig. 3 ist dadurch charakterisiert, dass sowohl sein Arbeitskreis (30) wie auch sein Kontrollkreis (34) zweikanalig aufgebaut sind.
Im Arbeitskreis (30) kann das Betriebsmittel (31) über zwei Umschalter (K1,K2) in ihren Schaltstellungen (a1c1) bzw. (a2,c2) zweifach - d.h. mit erhöhter Sicherheit - vom Netz getrennt werden, wodurch die Anlage in den sicheren Zustand gebracht wird. Eingestreute Interferenzen des im HF-Generator (35) erzeugten HF-Signales (HF) werden für jeden Umschalter (K1,K2) separat über die Entstörkapazitäten (32) bzw. (33) auf Erde abgeleitet.
Im Kontrollkreis (34) erfolgt die periodische Kontrolle der beiden Umschalter (K1, K2) ebenfalls zweikanalig. Hierzu werden die Umschalter (K1,K2) durch die beiden M-Prozesssoren (56) bzw. (57) über die Steuerleitungen (58) bzw. (59) entregt, wodurch ihre Kontakte in die Schaltstellungen (a1,c1) bzw. (a2, c2) abfallen sollen.
Nimmt in der Folge der Umschalter (K1) tatsächlich die korrekte Schaltstellung (a1,c1) ein wird das vom HF-Generator (35) erzeugte HF-Signal (HF) über den Verstärker (42), die Widerstände (44,45) und die A/D-Wandler (48, 49) mit voller Amplitude (HFmax) auf die beiden M-Prozessoren (56,57) durchgeschaltet. Diese interpretieren dieses Signal - unabhängig voneinander - wegen seiner grossen Amplitude (HFmax) als positives Kontrollergebnis und stellen an den Ausgängen (60) bzw. (62) entsprechende, positive Sicherheitssignale (S) zur Verfügung. Bleibt im Gegensatz dazu aber der Umschalter (K1) in seiner Arbeisstellung (a1b1) hängen, wird das kontrollierende HF-Signal infolge der geöffneten Schalterstellung (a1c1) mit grosser Dämpfung, d.h. mit nur minimaler Amplitude (HFmin) auf die M-Prozessoren (56, 57) durchgschaltet. Diese interpretieren dieses Signal - unabhängig voneinander - wegen der geringen Amplitude (HFmin) als negatives Kontrollergebnis, signalisieren dies mit negativen Sicherheitssignalen S an ihren Ausgängen (60) bzw. (62) und leiten, die Anlage sichernde Massnahmen ein.
In gleicher Weise erfolgt - parallel verlaufend - die Kontrolle für den Umschalter (K2), wobei die entsprechenden Sicherheitssignale S an den Ausgängen (61, 63) der beiden M-Prozessoren (56) bzw. (57) bereit gestellt werden. Diese können alternativ auch die Generierung und Detektierung des hochfrequenten Kontrollsignales (HF) übernehmen.
Zusammen mit den Umschaltern (K1,K2) wird gleichzeitig auch der Kontrollkreis (34) kontrolliert. Fallen nämlich seine Elemente, wie z.B. der HF-Generator (35), die Verstärker (42, 43) oder die A/D-Wandler (48,49,50,51), einzeln oder in Kombination aus, steht an den M-Prozessoreingängen (52,53,54,55) mindestens ein HF-Signal mit Amplitude 0 (HF0) an, woraus der betroffene M-Prozessor (56,57) auf einen Fehler im Kontrollkreis schliesst. Aufgrund des an den M-Prozessoreingängen (52,53,54,55) anstehenden Musters an HF-Signalen (HFmax, HFmin, HF0) ordnen die beiden M-Prozessoren (56,57) einen Fehler dem Umschalter (K1), oder dem Umschalter (K2) zu, oder grenzen ihn mit einem Code an den Sicherheitsausgängen (67,68) auf ein Element des Kontrollkreises (34) ein.
Beide M-Prozessoren (56,57) sind hard - und softwaremässig unterschiedlich aufgebaut. Ihre sicherheitsrelevanten Programme sind in unterschiedlichen Sprachen programmiert - konzipiert durch zwei Analytiker und geschrieben durch zwei Programmierer.

## Patentansprüche

1. Einrichtung in der Sicherheitstechnik zur Kontrolle der Schaltstellung mechanischer Schaltkontakte enthaltend für jeden zu kontrollierenden Arbeitskontakt einen diesem fest zugeordneten und von diesem potentialmässig getrennten, als Ruhekontakt wirkenden mechanischen Kontrollkontakt, eine Kontrollschaltung zur Überwachung des Kontrollkontaktes mit einem auf diesen einwirkenden Generator zur Erzeugung eines Kontrollsignales und mit einem von diesem gespeisten Detektor zum Empfang des Kontrollsignales und mit einer Auswerteschaltung zur Abgabe eines Sicherheitssignales
**dadurch gekennzeichnet,**
**dass** mindestens ein Umschalter (K) in seiner Arbeitsstellung (ab) Teil eines Arbeitskreises (6) und in seiner Ruhestellung (ac) Teil eines vom Arbeitskreis (6) potentialmässig getrennten Kontrollkreises (7) ist, wobei in der Arbeitsstellung (ab) des Umschalters (K) im Arbeitskreis (6) ein Arbeitsstrom auf zugehörige Betriebsmittel (20) geschaltet ist und in der Ruhestellung (ac) des Umschalters (K) im Kontrollkreis (7) ein als HF-Signal (HF) ausgebildetes Kontrollsignal von einem HF-Generator (10) über der Potentialtrennung dienende Koppeltransformatoren (24,25) und Koppelkapazitäten (11,12), und einen HF-Detektor (13) mit Verstärker/Logarithmierer (22) und A/D-Wandler (23) auf einen, die Amplituden des empfangenen HF-Signales (HF) den entsprechenden Kontaktstellungen (ab) und (ac) des Umschalters (K) zuordnenden, ein anlagesteuernd wirksames Sicherheitssignal (S) erzeugenden M-Prozessor (5) geschaltet ist.

2. Einrichtung in der Sicherheitstechnik nach Anspruch 1
**dadurch gekennzeichnet,**
**dass** das über die Schaltstellung (ac) des Umschalters (K) geschaltete HF-Signal (HF) ein hochfrequentes Sinus- oder Impulssignal ist oder einen telegrammartigen Aufbau besitzt.

3. Einrichtung in der Sicherheitstechnik nach Anspruch 1
**dadurch gekennzeichnet,**
**dass** das über die Schaltstellung (ac) des Umschalters (K) geschaltete HF-Signal (HF) doppelt dynamisch ausgebildet ist, eine Frequenz von mindestens 455 kHz aufweist und periodisch, mindestens alle 30 ms, mit einer Impuldauer von 3 ms getaktet ist.

4. Einrichtung in der Sicherheitstechnik nach Anspruch 1
**dadurch gekennzeichnet,**
**dass** die Amplitude des vom HF-Detektor (13) über die Verbindungsleitung (14) an den M-Prozessor (5) übertragenen HF-Signales (HF) Kriterium ist für die Beurteilung der Funktionstüchtigkeit des Umschalters (K) sowie des Kontrollkreises (7), wobei gilt
HF-Signal (HF) = HFmax Umschalter K ist funktionstüchtig
HF-Signal (HF) = HFmin Umschalter K ist nicht funktionstüchtig
kein HF-Signal (HF) = HF0 Kontrollkreis ist defekt.

5. Einrichtung in der Sicherheitstechnik nach Anspruch 1
**dadurch gekennzeichnet,**
**dass** in der Stellung (ab) des Umschalters (K) für das HF-Signal (HF) zwischen HF-Generator (10) und HF-Detektor (13) eine Dämpfung von mindestens 48 db gewährleistet ist.

6. Einrichtung in der Sicherheitstechnik nach Anspruch 1
**dadurch gekennzeichnet,**
**dass** zur HF-mässigen Entkopplung zwischen dem Arbeitskreis (6) und dem Kontrollkreis (7) eine Entstörkapazität (21) zwischen Arbeitsleitung und Erde eingeschaltet ist.

7. Einrichtung in der Sicherheitstechnik nach Anspruch 1
**dadurch gekennzeichnet,**
**dass** der Arbeitskreis (30) und der Kontrollkreis (34) je zweikanalig aufgebaut sind, und die Kontrollsignale (HF1,HF2) an den Ausgängen der beiden Verstärker (42) bzw. (43) je über die Widerstände (44,45) bzw. (46,47), die AD-Wandler (48,49) bzw. (50,51) auf jeden der beiden M-Prozessore (56,57) geschaltet sind.

8. Einrichtung in der Sicherheitstechnik nach Anspruch 7
**dadurch gekennzeichnet,**
**dass** die beiden M-Prozessoren (56,57) zur gegenseitigen Überwachung und zum gegenseitigen Informationsaustausch über die Verbindungsleitungen (64,65) bzw über den Datalink (66) miteinander verbunden sind.

9. Einrichtung in der Sicherheitstechnik nach Anspruch 7
**dadurch gekennzeichnet,**
**dass** die beiden M-Prozessoren (56,57) zur hardwaremässigen Diversität hardwaremässig unterschiedlich aufgebaut sind und hierzu Wortlängen von z.B. 8 und 16 Bit aufweisen.

10. Einrichtung in der Sicherheitstechnik nach Anspruch 7
**dadurch gekennzeichnet,**
**dass** die beiden M-Prozessoren (56,57) zur softwaremässigen Diversität in unterschiedlichen Sprachen programmiert sind, z:B. in Assembler und in C.
